# EUROPÄISCHE PATENTSCHRIFT

(11) **EP 2 595 736 B1**
(45) Veröffentlichungstag und Bekanntmachung des Hinweises auf die Patenterteilung: **17.09.2014**
(21) Anmeldenummer: 11740853.4
(22) Anmeldetag: 04.08.2011
(51) Int. Cl.: B01F 7/16, B01F 11/04, B01F 13/04, G05B 19/4065, G05B 23/02, B01F 15/00

(54) **MISCH-, RÜHR- ODER DISPERGIERVERFAHREN UND VORRICHTUNG HIERFÜR**
MIXING, STIRRING OR DISPERSING METHOD AND APPARATUS THEREFOR
PROCÉDÉ DE MÉLANGEAGE, D'AGITATION OU DE DISPERSION ET DISPOSITIF ASSOCIÉ

(30) Priorität: 01.10.2010 DE 102010047305
(43) Veröffentlichungstag der Anmeldung: 29.05.2013
(73) Patentinhaber: IKA - Werke GmbH & Co. KG, 79219 Staufen (DE)
(72) Erfinder: EBLE, Erhard, 79189 Bad Krozingen (DE)
(74) Vertreter: Börjes-Pestalozza, Heinrich
(86) Internationale Anmeldenummer: PCT/EP2011/003921
(87) Internationale Veröffentlichungsnummer: WO 2012/041415

(56) Entgegenhaltungen:
- EP-A1- 1 874 448
- WO-A1-2005/124488
- DE-B3-102006 030 056
- FR-A1- 2 929 728
- US-A1- 2004 111 237

## Beschreibung

Die Erfindung betrifft ein Misch-, Rühr- oder Dispergierverfahren, bei welchem Verfahren ein in einen Mischraum eines Behältnisses hineinragendes stabförmiges Element, das am Eintritt in den Mischraum mit einer Membran verbunden ist, welche Membran Teil einer Wandung des Behältnisses ist, zur Bearbeitung des Inhaltes des Mischraumes gemeinsam mit der Membran durch einen Antrieb in Bewegung versetzt wird.

Die Erfindung betrifft außerdem eine Misch-, Rühr- oder Dispergiervorrichtung zur Durchführung des eingangs genannten Verfahrens mit einem einen Mischraum aufweisenden Behältnis, mit einem in diesen Mischraum hineinragenden stabförmigen Element zur Kraftübertragung eines Antriebs auf den Inhalt des Mischraumes und mit einem außerhalb des Mischraumes befindlichen derartigen Antrieb, wobei das stabförmige Element am Eintritt in den Mischraum mit einer Membran verbunden ist, welche Teil einer Wandung des Behältnisses ist, und das stabförmige Element und die Membran durch den Antrieb in Bewegung versetzbar ist.

Derartige Misch-, Rühr- oder Dispergiervorrichtungen sind beispielsweise aus EP 1 874 447 B1 und EP 1 874 448 B1 bekannt. Bei diesen an sich bewährten Vorrichtungen treibt das mit der Membran verbundene stabförmige Element entweder einen in dem Mischraum angeordneten Rotor oder in den Mischraum einzubringende Mahlelemente an, so dass diese Vorrichtungen zur Durchführung des Verfahrens dienen.

Bei dem Betrieb dieser Vorrichtungen kann es jedoch passieren, dass abhängig zumindest von der Drehzahl des Antriebs und damit von der Anzahl der Lastwechsel der Membran, diese beschädigt oder während der Durchführung des Verfahrens zerstört wird und das zu verarbeitende Medium austritt.

Es besteht deshalb die Aufgabe, ein Verfahren der genannten Art zu schaffen, bei dem ein Austreten des Mediums aufgrund einer Beschädigung der Membran vermieden werden kann.

Zur Lösung dieser Aufgabe ist vorgesehen, dass die Anzahl der Umdrehungen des Antriebes gezählt und der Antrieb bei Erreichen einer für die Belastbarkeit der Membran zulässigen Höchstzahl von Umdrehungen und daraus ableitbaren Anzahl von Lastwechseln abgeschaltet wird. Dadurch besteht die Möglichkeit, einen Misch-, Rühr- oder Dispergiervorgang rechtzeitig vor einem Versagen zum Beispiel in Form eines Reißens der Membran zu beenden. So kann vermieden werden, dass das zu bearbeitende Medium ungewollt aus dem Behältnis austritt.

Bei toxischen oder kontaminierten Medien kann der rechtzeitige Abbruch der Bearbeitung das Versagen der Membran verhindern und dadurch das bei einem Austreten der Medien durch die beschädigte Membran hindurch drohende Gesundheitsrisiko für einen Anwender reduzieren.

Dabei ist es für den Anwender möglich, den Antrieb bei Erreichen der zulässigen Anzahl von Lastwechseln gegebenenfalls von Hand abzuschalten. Ähnlich wie bei regelmäßigen Wartungsintervallen, wie sie beispielsweise bei der Wartung und Instandhaltung von PKW eingehalten werden sollen, kann das potentielle Verschleißteil - hier die Membran - präventiv und vor einem Versagen rechtzeitig außer Betrieb gesetzt und/oder ausgetauscht werden.

Besonders günstig ist es, wenn der Antrieb bei Erreichen der für die Membran zulässigen Höchstzahl von Lastwechseln automatisch abgeschaltet wird. Dadurch kann auch eine unbeaufsichtigte Durchführung des Verfahrens möglich sein, da der Antrieb automatisch und rechtzeitig vor einem schädlichen Versagen der Membran abgeschaltet werden kann.

Von besonderer Bedeutung für das erfindungsgemäße Verfahren kann es sein, wenn die zulässige Höchstzahl der von der Membran tolerierten Lastwechsel in Abhängigkeit von Verfahrensparametern modifiziert wird. Die Modifikation, also Anpassung der zulässigen Höchstzahl der von der Membran tolerierten Lastwechsel in Abhängigkeit von Verfahrensparametern kann deswegen sinnvoll sein, weil Verfahrensparameter wie beispielsweise die Drehzahl des Antriebs (Umdrehungen pro Minute), die Bearbeitungsdauer eines Verfahrensdurchganges, die Temperatur des Mediums oder chemische Zusätze und/oder Bestandteile des Mediums sowie weitere hier nicht genannte Betriebs- und Verfahrensparameter die Belastbarkeit der Membran und damit ihre Lebensdauer beeinflussen und gegebenenfalls herabsetzen können.

So ist es denkbar, dass eine höhere Drehzahl, die zu einer höheren Lastwechselfrequenz der Membran führt, im Vergleich zu einer geringeren Drehzahl - selbst bei identischer Anzahl von Umdrehungen - zu einem früheren Versagen der Membran führen kann. In solch einem Fall kann es sinnvoll sein, die zulässige Höchstzahl der von der Membran tolerierten Lastwechsel in Abhängigkeit dieser Drehzahl zu reduzieren.

Einen ähnlichen, lebensverkürzenden Einfluss könnten beispielsweise auch aggressive, saure oder basische Medien oder sonstige das Material der Membran und/oder des Behältnisses angreifende Chemikalien auf die Membran haben, so dass es auch in diesen Fällen notwendig sein kann, die zulässige Höchstzahl von Lastwechseln herabzusetzen.

Ferner kann es zweckmäßig sein, wenn die Anzahl der Lastwechsel und/oder die Anzahl der Umdrehungen des Antriebes über mehrere Bearbeitungsvorgänge akkumuliert werden. Dadurch ist es möglich, die von der Membran erfahrene Belastung, die während vorhergehenden Bearbeitungsvorgängen auf die Membran bereits eingewirkt haben, zusammenzufassen und für einen Vergleich mit der zulässigen Höchstzahl von tolerierten Lastwechseln bereitzustellen.

Außerdem kann somit eine Historie des für das erfindungsgemäße Verfahren eingesetzten Behältnisses und seine Membran zur Verfügung stehen, anhand derer der Zustand und die Einsatzfähigkeit des Behältnisses und seiner Membran für zukünftige Bearbeitungsgänge mit dem Verfahren abgeschätzt werden können.

Dazu kann es zweckmäßig sein, wenn die akkumulierte Anzahl der Lastwechsel und/oder die akkumulierte Anzahl der Umdrehungen des Antriebes mehrerer Bearbeitungsvorgänge gespeichert werden. Durch die Speicherung der akkumulierten Anzahl der Lastwechsel der Membran ist es möglich, diese festzuhalten und gegebenenfalls zu einem späteren Zeitpunkt wieder aufzurufen und/oder bei Bedarf z.B. für eine statistische Auswertung heranzuziehen.

Besonders günstig ist es dabei, wenn die akkumulierte Anzahl der Lastwechsel der Membran von mehreren Bearbeitungsvorgängen dem jeweils zur Bearbeitung eingesetzten Behältnis zugeordnet wird. Die Zuordnung der akkumulierten Anzahl von Lastwechseln zu dem jeweiligen Behältnis kann besonders dann sinnvoll sein, wenn das Behältnis zwischenzeitlich von dem Antrieb abgenommen und beispielsweise zwischengelagert und/oder mit einem anderen Antrieb kombiniert wird. Die Zuordnung dieser Daten kann folglich die Aufzeichnung einer behältnisspezifischen Benutzungshistorie erleichtern.

Die Kontrolle und/oder Überwachung der Membran kann ferner erleichtert werden, wenn vor dem und/oder bei dem Erreichen und/oder Überschreiten der für die Membran vorgegebenen zulässigen Anzahl von Lastwechseln durch ein Signal gewarnt wird. Durch die rechtzeitige Warnung kann ein Anwender darauf aufmerksam gemacht werden, dass die Belastbarkeit der Membran erreicht wurde und der Antrieb - gegebenenfalls von Hand - abzuschalten und/oder das Behältnis auszutauschen ist.

Insbesondere in den Fällen, in denen ein Anwender mehrere solcher Misch-, Rühr- oder Dispergiervorrichtungen zu überwachen hat, können durch die rechtzeitige Anzeige eines drohenden Versagens der Membran beziehungsweise eines notwendigen Austauschens der Membran und/oder des Behältnisses Stillstandszeiten durch eine Information des überwachenden Anwenders vermieden werden. Dabei ist es auch denkbar, dass bereits vor dem Erreichen der Höchstzahl von Lastwechseln eine gewisse Restlastwechselzahl und/oder Restlaufzeit bis zum Erreichen der Höchstzahl signalisiert oder mitgeteilt wird.

Zur Lösung der Aufgabe ist bei der eingangs definierten Vorrichtung vorgesehen, dass die Vorrichtung ein Zählwerk zur Erfassung der Anzahl der Umdrehungen des Antriebes und der Lastwechselanzahl der Membran aufweist.

Mit Hilfe des Zählwerkes kann die Lastwechselanzahl, die während der Durchführung des erfindungsgemäßen Verfahrens die Membran belastet, bestimmt werden. Dadurch ist ein Vergleich der aufgetretenen, gezählten Lastwechsel mit der für die Membran zulässigen Höchstzahl von Lastwechseln möglich.

Dabei ist es günstig, wenn die Anzahl der Umdrehungen des Antriebes auch über mehrere Bearbeitungsvorgänge mit Hilfe des Zählwerkes zur Bestimmung der Anzahl der die Membran belastenden Lastwechsel akkumulierbar ist. Mit Hilfe des Zählwerkes kann so die Anzahl von Umdrehungen des Antriebes und die daraus ableitbare Anzahl von Lastwechseln der Membran auch über mehrere Bearbeitungsvorgänge hinweg festgehalten werden.

Dazu kann es besonders zweckmäßig sein, wenn eine Speichervorrichtung zur Speicherung der über mehrere Bearbeitungsvorgänge akkumulierten Anzahl von Umdrehungen des Antriebes vorgesehen ist, um die Anzahl erfolgter Umdrehungen des Antriebes auch zu einem späteren Zeitpunkt noch abrufen zu können. Die Speichervorrichtung kann ähnlich einem Kilometerzähler oder Tachometer als mechanisches Zählwerk oder aber elektronisch ausgebildet sein.

Um das Erreichen einer bestimmten Höchstzahl von Lastwechseln einem Anwender zu signalisieren, kann es zweckmäßig sein, wenn die Vorrichtung eine Anzeige und/oder wenigstens einen Signalgeber aufweist.

Besonders günstig ist es, wenn der Signalgeber ein Tongeber und/oder eine Lampe und/oder eine sonstige sinnlich-wahrnehmbare Signalquelle, zum Beispiel ein Vibrationsalarm, ist. Dadurch kann ein Anwender auf das Erreichen einer vorgegebenen Lastwechselanzahl durch die Vorrichtung aufmerksam gemacht werden kann.

Zur Durchführung des zuvor beschriebenen Verfahrens kann es insbesondere zweckmäßig sein, wenn der Antrieb eine Schalteinrichtung in Form einer Steuerelektronik aufweist, die mit dem Zählwerk derart verbunden ist, dass der Antrieb bei Erreichen der zulässigen Anzahl von Umdrehungen abschaltbar ist.

Besonders günstig kann es dabei sein, wenn der Antrieb bei Erreichen der zulässigen Anzahl von Umdrehungen von der Steuerelektronik automatisch abschaltbar ist. Dies kann den unbeaufsichtigten Betrieb der erfindungsgemäßen Vorrichtung sowie die unbeaufsichtigte Durchführung des eingangs beschriebenen Verfahrens ermöglichen.

Außerdem kann es als vorteilhaft angesehen werden, wenn das Zählwerk ein elektronisches, insbesondere softwareimplementiertes Zählwerk ist und/oder eine Auswerteelektronik aufweist. Durch ein derartiges Zählwerk, welches mit dem Antrieb verbunden sein kann, ist eine interne Kommunikation der in der Vorrichtung vorgesehenen Elemente untereinander vereinfacht. Außerdem kann solch ein Zählwerk auch bereits in der Auswertelektronik oder einem anderen elektronischen Bauteil der Vorrichtung integriert sein.

Mit Hilfe der Auswerteelektronik können die von dem Zählwerk und/oder von weiteren Elementen der Vorrichtung bereitgestellten Informationen, wie beispielsweise der Temperatur, des pH-Wertes, und/oder der Viskosität eines zu bearbeitenden Mediums oder anderen, von dieser zur Berechnung der für die Membran zulässigen Höchstzahl von Lastwechseln hinzugezogen werden.

Dazu kann es besonders günstig sein, wenn das Zählwerk oder die Auswerteelektronik oder die Steuerelektronik eine gespeicherte Kennlinie enthält, die den Zusammenhang zwischen einerseits der Drehzahl und der Anzahl der Umdrehungen des Antriebes und andererseits der die Belastbarkeit der Membran repräsentierenden, zulässigen Höchstzahl von Lastwechseln abbildet. Mit Hilfe der Kennlinie können diese und gegebenenfalls auch zuvor genannte Betriebsparameter in Form eines mathematischen Models für die Kalkulation und Modifikation der zulässigen Höchstzahl von Lastwechseln berücksichtigt sein.

Besonders günstig kann es sein, wenn die Speichervorrichtung an dem Behältnis angeordnet ist. Dadurch kann die Anzahl von Lastwechseln, welche durch Bearbeitungsvorgänge mit dem jeweiligen Behältnis und durch das Verfahren auf die Membran eingewirkt haben, diesem Behältnis und seiner Membran zugeordnet werden.

Vor allem dann, wenn das Behältnis zwischen zwei aufeinanderfolgenden Bearbeitungsvorgängen von der Vorrichtung abgenommen oder abgetrennt wird, kann es sinnvoll sein, die Daten bezüglich seiner Bearbeitungshistorie und Belastbarkeit mit dem Behältnis mitzuführen.

Eine Zuordnung der Betriebsdaten zu einem Behältnis ist auch innerhalb der Vorrichtung selbst denkbar. Hierfür ist es zweckmäßig, wenn das Behältnis eindeutig identifizierbar ist, um diesem die Betriebsdaten zuordnen zu können. Diese Identifikation kann dabei mechanisch oder in gängiger Weise elektronisch erfolgen.

Besonders sinnvoll kann es sein, wenn der für die Membran zulässige Höchstwert der Anzahl von Lastwechseln in der Speichervorrichtung abgespeichert ist. Vor allem wenn der zulässige Höchstwert der Anzahl von Lastwechseln aufgrund von variierenden Betriebsparametern bereits durchgeführter Bearbeitungsdurchgänge auch bei der Verwendung unterschiedlicher Behältnisse modifiziert werden soll, kann es notwendig sein, diesen Behältnissen, selbst bei übereinstimmender Bauart, verschiedene zulässige Höchstwerte von Lastwechselanzahlen zuzuordnen. Günstig ist es, wenn diese Daten direkt an dem Behältnis abgespeichert sind.

Eine Ausführungsform der Erfindung von besonderer Bedeutung kann darin bestehen, dass die Speichervorrichtung ein elektronisch auslesbarer und/oder beschreibbarer RFID-Chip ist und das Zählwerk oder die Steuerelektronik oder die Auswerteelektronik eine Sende-Empfangseinheit zum drahtlosen Auslesen und/oder Beschreiben des RFID-Chips aufweist. Mit Hilfe der Sende-Empfangseinheit kann dann die an dem Behältnis vorgesehene Speichervorrichtung in Form des RFID-Chips berührungslos ausgelesen und/oder beschrieben werden. Dabei werden Anschlusskabel und/oder sonstige Verbindungsmittel, wie z.B. Steckverbindungen, vermieden, so dass die Handhabung der Vorrichtung und/oder des Behältnisses beispielsweise nicht durch Kabel oder Kabelverbindungen beeinträchtigt wird.

Von Vorteil kann es auch sein, wenn die Speichervorrichtung an und/oder in der Wandung des Behältnisses angeordnet ist. Eine derartig positionierte Speichervorrichtung - vor allem in Form eines RFID-Chips - kann so besonders gut vor Feuchtigkeit, chemisch aggressiven Medien, Stößen oder sonstigen schädlichen Umwelteinflüssen geschützt sein.

Die Bedienung und Handhabung der erfindungsgemäßen Vorrichtung kann durch eine Anzeige, insbesondere ein Display, zum Anzeigen der in der Speichervorrichtung abgelegten Informationen in besonders komfortabeler Weise erleichtert sein. So ist es für einen Anwender möglich, betriebsrelevante Parameter aus der Speichervorrichtung auszulesen und sich diese über das Display anzeigen zu lassen. Dies kann die Steuerung und Durchführung des Verfahrens vereinfachen.

Ferner ist es möglich, dass die Speichervorrichtung zur Aufnahme und Ausgabe zusätzlicher Informationen, insbesondere bezüglich des Inhaltes und/oder der Anzahl der Benutzungen des Behältnisses, programmierbar ist. Damit kann eine nahezu lückenlose Historie, auch bezüglich verschiedener Betriebsparameter, eines Behältnisses angelegt und zu einem beliebigen späteren Zeitpunkt wieder abgerufen und gegebenenfalls ausgewertet werden.

Um mehrere Behältnisse mit der Vorrichtung verwenden zu können, ist es zweckmäßig, wenn das Behältnis mit dem Antrieb und/oder einem den Antrieb enthaltenen Gehäuse lösbar verbunden ist.

Nachstehend sind Ausführungsbeispiele der Erfindung anhand der Zeichnung näher beschrieben. Es zeigt in teilweise stark schematisierter Darstellung:
- Fig.1: eine perspektivische Außenansicht einer erfindungsgemäßen Vorrichtung mit einem Gehäuse, welches ein Display, eine Sende-Empfangseinheit und ein aufgesetztes, eine Membran enthaltendes Behältnis mit einer Speichervorrichtung in Form eines RFID-Chips aufweist,
- Fig.2: einen Längschnitt der in Fig. 1 dargestellten Vorrichtung mit einem in ihrem Inneren angeordneten Antrieb, welcher ein stabförmiges, mit einer Membran verbundenes Element zur Bearbeitung des Mediums in dem Mischraum des Behältnisses antreibt,
- Fig.3: eine Seitenansicht des in Fig. 1 dargestellten Behältnisses mit einem an seiner Wandung befestigten RFID-Chips,
- Fig.4: einen Längsschnitt durch das Behältnis gemäß der Linie IV-IV in Fig. 3, wobei die Membran und das mit der Membran verbundene stabförmige Element zu erkennen sind,
- Fig.5: eine der Fig.3 entsprechende Darstellung eines abgewandelten, erfindungsgemäßen Behältnisses,
- Fig.6: einen Längsschnitt entlang der Linie VI-VI in Fig. 5, wobei ein RFID-Chip in die Wandung des Behältnisses eingearbeitet ist, sowie
- Fig.7: eine schematisierte Darstellung der Verschaltung, der an der Durchführung des Verfahrens beteiligten Elemente der Vorrichtung.

Bei der nachfolgenden Beschreibung verschiedener Ausführungsformen der Erfindung erhalten in ihrer Funktion übereinstimmende Elemente auch bei abweichender Gestaltung oder Formgebung übereinstimmende Bezugszahlen.

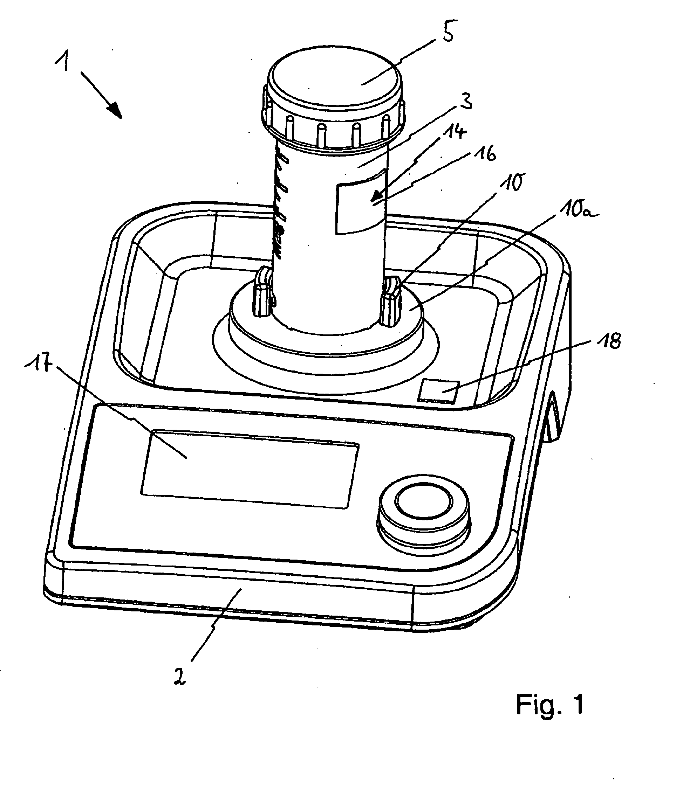

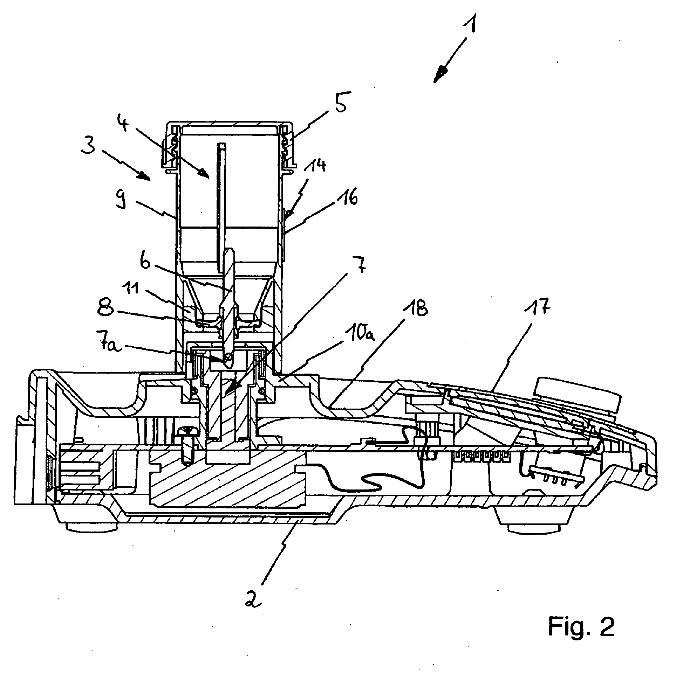

Fig. 1 zeigt eine Misch-, Rühr- oder Dispergiervorrichtung 1 mit einem auf ihrem Gehäuse 2 aufgesetzten und im Wesentlichen zylindrischen, röhrenförmigen Behältnis 3. Gemäß den Fig. 2, 4 und 6 hat das Behältnis 3 in seinem Inneren einen Mischraum 4, welcher Mischraum 4 im Ausführungsbeispiel durch einen Schraubdeckel 5 hermetisch verschlossen ist.

In den Mischraum 4 des Behältnisses 3 ragt ein stabförmiges Element 6 zur Kraftübertragung eines Antriebes 7 auf den Inhalt des Mischraums 4. Dabei ist das stabförmige Element 6 am Eintritt in den Mischraum 4 gemäß den Fig. 2, 4 und 6 mit einer Membran 8 verbunden. Diese Membran 8 ist Teil einer Wandung 9 des Behältnisses 3 und wird gemeinsam mit dem stabförmigen Element 6 über einen Kupplungsbereich 7a durch den Antrieb 7 der Vorrichtung 1 in Bewegung versetzt.

Das stabförmige Element 6 kann dabei mit einem Rotor oder mit in den Mischraum einzubringenden Mahlelementen, vorzugsweise Kugeln, zusammenwirken, wie es beispielsweise aus EP 1 874 447 B1 und EP 1 874 448 B1 bekannt ist.

Fig. 2 zeigt, dass der Antrieb 7 außerhalb des Mischraums 4 und unterhalb des auf einen Aufnahmesockel 10a der Dispergiervorrichtung 1 aufgesetzten Behältnisses 3 innerhalb ihres Gehäuses 2 angeordnet ist. Wie in den Fig. 1 und 2 zu erkennen, ist das Behältnis 3 durch Festlegehilfen in Form von Bajonettverschlüssen 10, welche mit passenden Gegenstücken an dem Aufnahmesockel 10a des Gehäuses 2 zusammenwirken, lösbar festlegbar.

In den Fig. 2, 4 und 6 ist ebenfalls zu erkennen, dass das stabförmige Element 6 mit der Membran 8 diese hermetisch dicht durchsetzend verbunden ist. Das stabförmige Element 6 wird zusammen mit der Membran 8 am Eintritt in den Mischraum 4 durch ein ringförmiges Verschlussstück 11 festgelegt, so dass die Membran 8 einen Teil der Wandung 9 des Mischraums 4 bildet. Eine stoffschlüssige Verbindung zwischen der Membran 8, der Wandung 9 und dem stabförmigen Element 6 wäre ebenfalls möglich.

Durch den Antrieb 7 ist das stabförmige Element 6 in eine taumelnde Bewegung versetzbar, wodurch sein in den Mischraum 4 befindliches Ende eine kreisende Bewegung ausführt, die auch die mit dem stabförmigen Element 6 verbundene Membran 8 in einer sie in gewisser Weise verformenden Walkbewegung versetzt, wodurch das Material der Membran 8 ermüden und versagen kann.

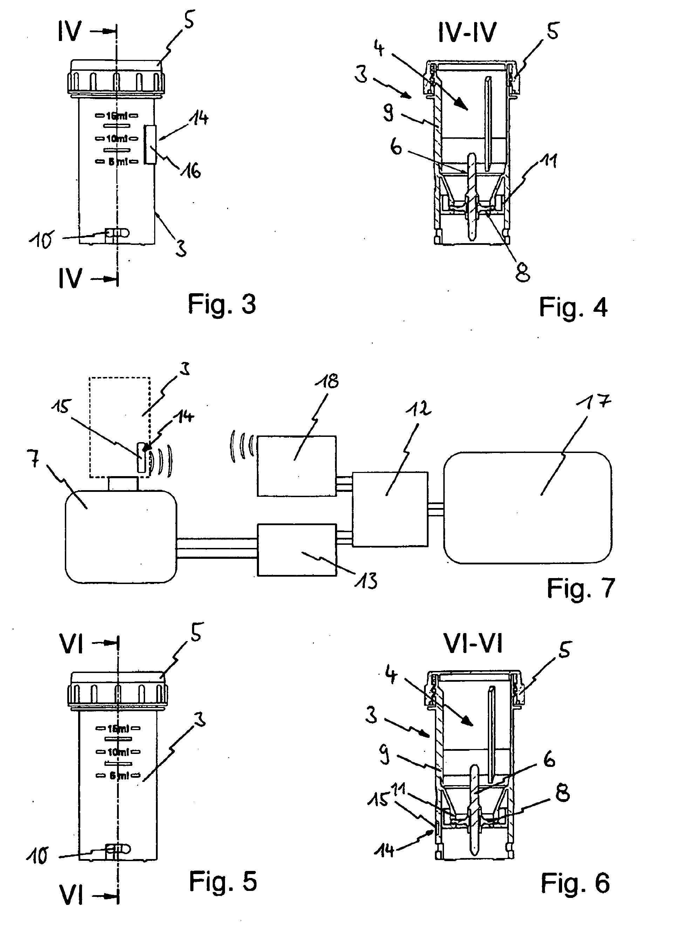

Die Dispergiervorrichtung 1 ist mit einem Zählwerk ausgestattet, um die Anzahl der Umdrehungen des Antriebes 7 erfassen zu können. Dieses Zählwerk ist im Ausführungsbeispiel in Form einer Auswerteelektronik 12 realisiert und schematisch in Fig. 7 dargestellt.

Die Auswerteelektronik 12 steht über eine Steuerelektronik 13 mit dem Antrieb 7 in Kontakt und kann so die notwendigen Informationen bezüglich der Drehzahl und der Anzahl von Umdrehungen des Antriebs 7 registrieren.

Da der Antrieb 7 direkt mit dem stabförmigen Element 6 und der Membran 8 zusammenwirkt, hat eine Umdrehung des Antriebes 7 einen Lastwechsel der Membran 8 zur Folge, welche Lastwechsel die Membran 8 mit zunehmender Anzahl verschleißen.

Gemäß den Fig. 1, 2, 3 und 6 ist die Dispergiervorrichtung 1 mit einer Speichervorrichtung 14 ausgestattet, mit Hilfe derer die Anzahl von Umdrehungen des Antriebes 7 gegebenenfalls auch über mehrere Bearbeitungsvorgänge mit der Vorrichtung 1 akkumuliert und gespeichert werden können.

Die Speichervorrichtung 14 kann dabei entweder in Form eines RFID-Chips 15 (vergleiche Fig. 6) oder als sogenannter RFID-Tag 16 oder als aufklebbares RFID-Label ausgebildet sein.

Fig. 3 zeigt die verwendung eines RFID-Tags 16 als Speichervorrichtung 14 an der Außenseite des Behältnisses 3. Dieses Behältnis 3 mit dem RFID-Tag 16 ist ebenfalls in den Fig. 1 und 2 zu erkennen.

Fig. 5 und 6 zeigen eine alternative Ausgestaltungsform des Behältnisses 3. Hierbei ist die Speichervorrichtung 14 in Form eines RFID-Chips 15 in die Wandung 9 nahe der Befestigungsstelle des Behältnisses 3 eingelassen und dadurch geschützt.

Gemäß Fig. 6 ist der RFID-Chip 15 dabei innerhalb einer Vertiefung in der Wandung 9 des Behältnisses eingeklebt. Es ist auch möglich, den RFID-Chip 15 bei der Herstellung des Behältnisses in die Wandung 9 einzuspritzen oder einzugießen.

Der Vorteil des RFID-Tags 16 gemäß den Fig. 1, 2 und 3 liegt darin, dass Behältnisse 3 gegebenenfalls auch nachträglich damit ausgestattet werden können.

Um einen Anwender der Dispergiervorrichtung 1 darüber zu informieren, dass die Membran 8 eine bestimmte Anzahl von Lastwechseln erfahren hat, ist die Dispergiervorrichtung 1 mit einem Signalgeber ausgestattet. Dieser Signalgeber wird im Ausführungsbeispiel durch ein am Gehäuse 2 der Dispergiervorrichtung 1 vorgesehenes Display 17 gebildet.

Diesem Display 17 kann der Anwender verschiedene Informationen bezüglich der laufenden Bearbeitung und/oder zuvor abgelaufener Bearbeitungen entnehmen. Außerdem kann auf diesem Display 17 eine Nachricht für den Anwender erscheinen, sobald die Belastbarkeit der Membran 8 durch eine bestimmte, vorgegebene Anzahl von Lastwechseln erreicht ist. In hier nicht dargestellten Ausführungsformen können anstatt des oder zusätzlich zu dem Display 17 auch weitere Signalgeber z.B. in Form von Tongebern, Lampen oder sonstigen sinnlich-wahrnehmbaren Signalquellen, insbesondere Vibrationsalarmen, vorgesehen sein.

Gemäß den Fig. 1, 2 und dem schematisierten Schaltbild in Fig. 7 ist die Dispergiervorrichtung 1 mit einer Sende-Empfangseinheit 18 zum drahtlosen Auslesen und/oder Beschreiben des RFID-Chips 15 bzw. des RFID-Tags 16 ausgestattet. Die Sende-Empfangseinheit 18 ist dabei gemäß Fig. 7 mit der Auswerteelektronik 12 verbunden. Die von der Sende-Empfangseinheit 18 empfangenen Daten aus der Speichervorrichtung 14 an dem Behältnis 3 kann so direkt von der Auswerteelektronik verarbeitet und an die Steuerelektronik 13, welche den Antrieb 7 steuert, weitergegeben werden.

Insbesondere bei der Verwendung sogenannter passiver RFID-Technik, die von außen zugeführte Energie benötigt, werden sowohl der RFID-Chip 15 als auch der RFID-Tag 16 über die Sende-Empfangseinheit 18 mit Strom aus einem von dieser Sende-Empfangseinheit 18 ausgesendeten elektromagnetischen Feld gespeist.

Mit Hilfe der Bajonettverschlüsse 10 ist das Behältnis 3 mit dem Antrieb 7 beziehungsweise mit dem den Antrieb 7 enthaltenen Gehäuse 2 lösbar verbunden. So können mit ein und derselben Dispergiervorrichtung 1 unterschiedliche Behältnisse 3 verwendet werden.

Während einer Benutzung der Vorrichtung 1 liefert die Steuerelektronik 13 der Auswerteelektronik 12 die ständig aktualisierte Anzahl von Umdrehungen des momentan durchgeführten Bearbeitungsdurchganges. Diese Anzahl wird gezählt und in der Auswerteelektronik 12 festgehalten. Mit Hilfe der von der Sende-Empfangseinheit 18 zur Verfügung gestellten, behältnis-spezifischen Informationen aus der Speichervorrichtung 14, kann die Auswertelektronik 12 zum einen in Abhängigkeit von den Betriebsparametern die für die Membran 8 des Behältnisses 3 spezifisch festzulegenden Höchstzahl von Lastwechseln modifizieren und andererseits die Anzahl der insgesamt von der Membran 8 durchgeführten Lastwechsel aktualisieren.

Über einen Vergleich zwischen der zulässigen Höchstzahl von Lastwechseln und der bis zu diesem Augenblick tatsächlich durchgeführten Anzahl von Lastwechseln, kann die Auswerteelektronik 12 den Antrieb mit Hilfe der Steuerelektronik 13 abstellen, bevor ein Versagen der Membran 8 erfolgt.

Der Antrieb 7 wird abgeschaltet, sobald die zulässige Höchstzahl von Umdrehungen erreicht ist. Diese Anzahl wird dann über die Sende-Empfangseinheit auf die Speichervorrichtung 14 an dem Behältnis 3 übertragen und dort gespeichert. Hat ein Behältnis 3 die für seine Membran 8 zulässige Höchstzahl an Lastwechseln erreicht, kann die Auswerteelektronik 12 dieses Behältnis 3 für eine weitere Verwendung mit der Vorrichtung 1 elektronisch sperren.

Bei dem Misch-, Rühr- oder Dispergierverfahren wird die Vorrichtung 1 mit einem Gehäuse 2 und einem Behältnis 3 verwendet. Das Behältnis 3 weist dabei einen Mischraum 4 auf, in welchen Mischraum 4 ein stabförmiges Element 6 hineinragt. Am Eintritt in den Mischraum 4 ist dieses stabförmige Element 6 mit einer Membran 8 verbunden, welche Membran 8 Teil einer Wandung 9 des Behältnisses 3 ist. Zur Bearbeitung des Inhalts des Mischraums 4 wird das stabförmige Element 6 gemeinsam mit der Membran 8 durch einen Antrieb 7 in Bewegung versetzt. Zur Vermeidung eines unbeabsichtigten Versagens der Membran 8 wird die Anzahl der Umdrehungen des Antriebes 7 gezählt und der Antrieb 7 bei Erreichen einer für die Belastbarkeit der Membran 8 zulässigen Höchstzahl von Umdrehungen und daraus ableitbaren Anzahl von Lastwechseln abgeschaltet.

## Patentansprüche

1. Misch-, Rühr- oder Dispergierverfahren, bei welchem Verfahren ein in einen Mischraum (4) eines Behältnisses (3) hineinragendes stabförmiges Element (6), das am Eintritt in den Mischraum (4) mit einer Membran (8) verbunden ist, welche Membran (8) Teil einer Wandung (9) des Behältnisses (3) ist, zur Bearbeitung des Inhaltes des Mischraums (4) gemeinsam mit der Membran (8) durch einen Antrieb (7) in Bewegung versetzt wird, **dadurch gekennzeichnet, dass** die Anzahl der Umdrehungen des Antriebes (7) gezählt und der Antrieb (7) bei Erreichen einer für die Belastbarkeit der Membran (8) zulässigen Höchstzahl von Umdrehungen und daraus ableitbaren Anzahl von Lastwechseln abgeschaltet wird.

2. Misch-, Rühr- oder Dispergierverfahren nach Anspruch 1, **dadurch gekennzeichnet, dass** der Antrieb (7) bei Erreichen der für die Membran (8) zulässigen Höchstzahl von Lastwechseln automatisch abgeschaltet und/oder bei Erreichen oder bei Überschreiten der vorgegebenen Anzahl von Lastwechseln abgeschaltet und das jeweilige Behältnis (3) elektronisch für eine weitere Verwendung in dem Verfahren gesperrt wird.

3. Misch-, Rühr- oder Dispergierverfahren nach Anspruch 1 oder 2, **dadurch gekennzeichnet, dass** die zulässige Höchstzahl der von der Membran (8) tolerierten Lastwechsel in Abhängigkeit von Verfahrensparametern modifiziert wird.

4. Misch-, Rühr- oder Dispergierverfahren nach einem der Ansprüche 1 bis 3, **dadurch gekennzeichnet, dass** die Anzahl der Lastwechsel oder die Anzahl der Umdrehungen des Antriebes (7) über mehrere Bearbeitungsvorgänge akkumuliert wird und/oder dass die akkumulierte Anzahl der Lastwechsel oder der Umdrehungen des Antriebes (7) mehrerer Bearbeitungsvorgänge gespeichert wird.

5. Misch-, Rühr- oder Dispergierverfahren nach einem der Ansprüche 1 bis 4, **dadurch gekennzeichnet, dass** die akkumulierte Anzahl der Lastwechsel der Membran (8) von mehreren Bearbeitungsvorgängen dem jeweils zur Bearbeitung eingesetzten Behältnis (3) zugeordnet wird.

6. Misch-, Rühr- oder Dispergiervorrichtung (1) zur Durchführung des in den vorhergehenden Ansprüchen beschriebenen Verfahrens mit einem einen Mischraum (4) aufweisenden Behältnis (3), mit einem in diesen Mischraum (4) hineinragenden stabförmigen Element (6) zur Kraftübertragung eines Antriebs (7) auf den Inhalt des Mischraums (4) und mit einem außerhalb des Mischraums (4) befindlichen derartigen Antrieb (7), wobei das stabförmige Element (6) am Eintritt in den Mischraum (4) mit einer Membran (8) verbunden ist, welche Teil einer Wandung (9) des Behältnisses (3) ist, und das stabförmige Element (6) und die Membran (8) durch den Antrieb (7) in Bewegung versetzbar ist, **dadurch gekennzeichnet, dass** die Misch-, Rühr- oder Dispergiervorrichtung (1) ein Zählwerk zur Erfassung der Anzahl der Umdrehungen des Antriebes (7) und der Lastwechselanzahl der Membran (8) aufweist.

7. Misch-, Rühr- oder Dispergiervorrichtung (1) nach Anspruch 6, **dadurch gekennzeichnet, dass** die Anzahl der Umdrehungen des Antriebes (7) auch über mehrere Bearbeitungsvorgänge mit Hilfe des Zählwerkes zur Bestimmung der Anzahl der die Membran (8) belastenden Lastwechsel akkumulierbar ist.

8. Misch-, Rühr- oder Dispergiervorrichtung (1) nach Anspruch 6 oder 7, **dadurch gekennzeichnet, dass** eine Speichervorrichtung (14) zur Speicherung der über mehrere Bearbeitungsvorgänge akkumulierten Anzahl von Umdrehungen des Antriebes (7) vorgesehen ist und/oder der für die Membran (8) zulässige Höchstwert der Anzahl von Lastwechseln in der Speichervorrichtung (14) abgespeichert ist.

9. Misch-, Rühr- oder Dispergiervorrichtung (1) nach einem der Ansprüche 6 bis 8, **dadurch gekennzeichnet, dass** die Vorrichtung (1) eine Anzeige und/oder wenigstens einen Signalgeber aufweist, wobei der Signalgeber ein Tongeber und/oder eine Lampe und/oder eine sonstige sinnlichwahrnehmbare Signalquelle oder ein Vibrationsalarm ist.

10. Misch-, Rühr- oder Dispergiervorrichtung (1) nach einem der Ansprüche 6 bis 9, **dadurch gekennzeichnet, dass** der Antrieb (7) eine Schalteinrichtung in Form einer Steuerelektronik (13) aufweist, die mit dem Zählwerk derart verbunden ist, dass der Antrieb (7) bei Erreichen der zulässigen Anzahl von Umdrehungen abschaltbar oder von der Steuerelektronik (13) automatisch abschaltbar ist.

11. Misch-, Rühr- oder Dispergiervorrichtung (1) nach einem der Ansprüche 6 bis 10, **dadurch gekennzeichnet, dass** das Zählwerk ein elektronisches oder softwareimplementiertes Zählwerk ist und/oder eine Auswerteelektronik (12) aufweist.

12. Misch-, Rühr- oder Dispergiervorrichtung (1) nach einem der Ansprüche 6 oder 11, **dadurch gekennzeichnet, dass** das Zählwerk oder die Auswerteelektronik (12) oder die Steuerelektronik (13) eine gespeicherte Kennlinie enthält, die den Zusammenhang zwischen einerseits der Drehzahl und der Anzahl der Umdrehungen des Antriebes (7) und andererseits der die Belastbarkeit der Membran (8) repräsentierenden zulässigen Höchstzahl von Lastwechseln abbildet.

13. Misch-, Rühr- oder Dispergiervorrichtung (1) nach einem der Ansprüche 6 bis 12, **dadurch gekennzeichnet, dass** die Speichervorrichtung (14) an dem Behältnis (3) oder an und/oder in der Wandung (9) des Behältnisses (3) angeordnet ist.

14. Misch-, Rühr- oder Dispergiervorrichtung (1) nach einem der Ansprüche 8 bis 13, **dadurch gekennzeichnet, dass** die Speichervorrichtung (14) ein elektronisch auslesbarer und/oder beschreibbarer RFID-Chip (15, 16) ist und das Zählwerk oder die Steuerelektronik (13) oder die Auswerteelektronik (12) eine Sende-Empfangseinheit (18) zum drahtlosen Auslesen und/oder Beschreiben des RFID-Chips (15, 16) aufweist.

15. Misch-, Rühr- oder Dispergiervorrichtung (1) nach einem der Ansprüche 6 bis 14, **dadurch gekennzeichnet, dass** die Vorrichtung (1) eine Anzeige, insbesondere ein Display (17), zum Anzeigen der in der Speichervorrichtung (14) abgelegten Informationen aufweist.

## Claims

1. Mixing, stirring or dispersing method, in which a rod-shaped element (6) which projects into a mixing chamber (4) of a container (3) and which is connected at the inlet into the mixing chamber (4) to a diaphragm (8) which is part of a wall (9) of the container (3) and, in order to process the contents of the mixing chamber (4), is made to move together with the diaphragm (8) by a drive (7), **characterized in that** the number of revolutions of the drive (7) is counted, and when a maximum permissible number of revolutions for the loading capability of the diaphragm (8) and the resulting number of load changes are reached the drive (7) is switched off.

2. Mixing, stirring or dispersing method according to Claim 1, **characterized in that** when the maximum permissible number of load changes for the diaphragm (8) is reached the drive (7) is switched off automatically and/or when the predefined number of load changes is reached or exceeded the drive (7) is switched off and the respective container (3) is electronically locked out of further use in the method.

3. Mixing, stirring or dispersing method according to Claim 1 or 2, **characterized in that** the maximum permissible number of load changes tolerated by the diaphragm (8) is modified as a function of method parameters.

4. Mixing, stirring or dispersing method according to one of Claims 1 to 3, **characterized in that** the number of load changes or the number of revolutions of the drive (7) is accumulated over a plurality of processing steps and/or **in that** the accumulated number of load changes or of revolutions of the drive (7) of a plurality of processing steps is stored.

5. Mixing, stirring or dispersing method according to one of Claims 1 to 4, **characterized in that** the accumulated number of load changes of the diaphragm (8) of a plurality of processing steps is assigned to the container (3) which is respectively used for processing.

6. Mixing, stirring or dispersing apparatus (1) for carrying out the method described in the preceding claims, having a container (3) which has a mixing chamber (4), having a rod-shaped element (6) which projects into this mixing chamber (4) and has the purpose of transmitting force of a drive (7) to the contents of the mixing chamber (4), and having a drive (7) of this type which is located outside the mixing chamber (4), wherein the rod-shaped element (6) is connected at the inlet into the mixing chamber (4) to a diaphragm (8) which is part of a wall (9) of the container (3), and the rod-shaped element (6) and the diaphragm (8) can be made to move by the drive (7), **characterized in that** the mixing, stirring or dispersing apparatus (1) has a counting unit for detecting the number of revolutions of the drive (7) and the number of load changes of the diaphragm (8).

7. Mixing, stirring or dispersing apparatus (1) according to Claim 6, **characterized in that** the number of revolutions of the drive (7) can also be accumulated over a plurality of processing steps using the counting unit in order to determine the number of load changes loading the diaphragm (8).

8. Mixing, stirring or dispersing apparatus (1) according to Claim 6 or 7, **characterized in that** a memory apparatus (14) is provided for storing the number of revolutions of the drive (7) accumulated over a plurality of processing steps and/or the maximum permissible value for the number of load changes for the diaphragm (8) is stored in the memory apparatus (14).

9. Mixing, stirring or dispersing apparatus (1) according to one of Claims 6 to 8, **characterized in that** the apparatus (1) has a displaying apparatus and/or at least one signal generator, wherein the signal generator is a sound generator and/or a lamp and/or some other signal source which can be perceived by sensory means or a vibration alarm.

10. Mixing, stirring or dispersing apparatus (1) according to one of Claims 6 to 9, **characterized in that** the drive (7) has a switching apparatus in the form of control electronics (13) which are connected to the counting unit in such a way that when the permissible number of revolutions is reached the drive (7) can be switched off or can be switched off automatically by the control electronics (13).

11. Mixing, stirring or dispersing apparatus (1) according to one of Claims 6 to 10, **characterized in that** the counting unit is an electronic or software-implemented counting unit, and/or has evaluation electronics (12).

12. Mixing, stirring or dispersing apparatus (1) according to one of Claims 6 and 11, **characterized in that** the counting unit or the evaluation electronics (12) or the control electronics (13) contains a stored characteristic curve which represents the relationship between, on the one hand, the rotational speed and the number of revolutions of the drive (7) and, on the other hand, the maximum permissible number of load changes representing the loading capability of the diaphragm (8).

13. Mixing, stirring or dispersing apparatus (1) according to one of Claims 6 to 12, **characterized in that** the memory apparatus (14) is arranged on the container (3) or on and/or in the wall (9) of the container (3).

14. Mixing, stirring or dispersing apparatus (1) according to one of Claims 8 to 13, **characterized in that** the memory apparatus (14) is an RFID chip (15, 16) which can be read out and/or written to electronically, and the counting unit or the control electronics (13) or the evaluation electronics (12) has a transceiver unit (18) for reading out and/or writing to the RFID chip (15, 16) in a wireless fashion.

15. Mixing, stirring or dispersing apparatus (1) according to one of Claims 6 to 14, **characterized in that** the apparatus (1) has a displaying apparatus, in particular a display (17), for displaying the information stored in the memory apparatus (14).

## Revendications

1. Procédé de mélange, d'agitation ou de dispersion, dans lequel procédé un élément (6) en forme de barre qui fait saillie dans une chambre de mélange (4) d'un récipient (3) et est relié à une membrane (8) à l'entrée dans la chambre de mélange (4), laquelle membrane (8) fait partie d'une paroi (9) du récipient (3), est mis en mouvement en commun avec la membrane (8) par un entraînement (7) pour traiter le contenu de la chambre de mélange (4), **caractérisé en ce que** le nombre de tours de l'entraînement (7) est compté et l'entraînement (7) est arrêté lorsqu'un nombre maximum de tours admissible pour la capacité de charge de la membrane (8) ou un nombre d'alternances de charge pouvant en être dérivé est atteint.

2. Procédé de mélange, d'agitation ou de dispersion selon la revendication 1, **caractérisé en ce que** l'entraînement (7) est arrêté automatiquement lorsque le nombre maximum d'alternances de charge admissible pour la membrane (8) est atteint et/ou arrêté lorsque le nombre d'alternances de charge prescrit est atteint ou dépassé et le récipient (3) respectif est verrouillé électroniquement pour toute autre utilisation dans le procédé.

3. Procédé de mélange, d'agitation ou de dispersion selon la revendication 1 ou 2, **caractérisé en ce que** le nombre maximum admissible d'alternances de charge toléré par la membrane (8) est modifié en fonction de paramètres du procédé.

4. Procédé de mélange, d'agitation ou de dispersion selon l'une des revendications 1 à 3, **caractérisé en ce que** le nombre d'alternances de charge ou le nombre de tours de l'entraînement (7) est accumulé sur plusieurs opérations de traitement et/ou que le nombre accumulé d'alternances de charge ou de tours de l'entraînement (7) de plusieurs opérations de traitement est mémorisé.

5. Procédé de mélange, d'agitation ou de dispersion selon l'une des revendications 1 à 4, **caractérisé en ce que** le nombre d'alternances de charge accumulé de la membrane (8) de plusieurs opérations de traitement est associé au récipient (3) respectif utilisé pour le traitement.

6. Dispositif de mélange, d'agitation ou de dispersion (1) pour réaliser le procédé décrit dans les revendications précédentes, comprenant un récipient (3) présentant une chambre de mélange (4), un élément (6) en forme de barre faisant saillie dans cette chambre de mélange (4) pour transmettre la force d'un entraînement (7) au contenu de la chambre de mélange (4) et un tel entraînement (7) situé à l'extérieur de la chambre de mélange (4), l'élément (6) en forme de barre étant relié à une membrane (8) à l'entrée dans la chambre de mélange (4), laquelle membrane (8) fait partie d'une paroi (9) du récipient (3), et l'élément (6) en forme de barre et la membrane (8) pouvant être mis en mouvement par l'entraînement (7), **caractérisé en ce que** le dispositif de mélange, d'agitation ou de dispersion (1) présente un compteur pour détecter le nombre de tours de l'entraînement (7) et le nombre d'alternances de charge de la membrane (8).

7. Dispositif de mélange, d'agitation ou de dispersion (1) selon la revendication 6, **caractérisé en ce que** le nombre de tours de l'entraînement (7) peut être accumulé aussi sur plusieurs opérations de traitement à l'aide du compteur pour déterminer le nombre d'alternances de charge qui sollicitent la membrane (8).

8. Dispositif de mélange, d'agitation ou de dispersion (1) selon la revendication 6 ou 7, **caractérisé en ce qu'**un dispositif de mémorisation (14) pour mémoriser le nombre de tours de l'entraînement (7) accumulé sur plusieurs opérations de traitement est prévu et/ou le nombre maximum d'alternances de charge admissible pour la membrane (8) est mémorisé dans le dispositif de mémorisation (14).

9. Dispositif de mélange, d'agitation ou de dispersion (1) selon l'une des revendications 6 à 8, **caractérisé en ce que** le dispositif (1) présente un affichage et/ou au moins un émetteur de signaux, l'émetteur de signaux étant un émetteur acoustique et/ou une lampe et/ou une autre source de signaux perceptibles par les sens ou une alarme par vibrations.

10. Dispositif de mélange, d'agitation ou de dispersion (1) selon l'une des revendications 6 à 9, **caractérisé en ce que** l'entraînement (7) présente un dispositif de commutation sous la forme d'une électronique de commande (13) qui est reliée au compteur de façon que l'entraînement (7) puisse être arrêté ou être arrêté automatiquement par l'électronique de commande (13) lorsque le nombre de tours admissible est atteint.

11. Dispositif de mélange, d'agitation ou de dispersion (1) selon l'une des revendications 6 à 10, **caractérisé en ce que** le compteur est un compteur électronique ou implémenté par logiciel et/ou présente une électronique d'évaluation (12).

12. Dispositif de mélange, d'agitation ou de dispersion (1) selon l'une des revendications 6 ou 11, **caractérisé en ce que** le compteur, l'électronique d'évaluation (12) ou l'électronique de commande (13) contient une courbe caractéristique mémorisée qui représente la relation entre, d'une part, la vitesse de rotation et le nombre de tours de l'entraînement (7) et, d'autre part, le nombre maximum admissible d'alternances de charge qui représente la capacité de charge de la membrane (8).

13. Dispositif de mélange, d'agitation ou de dispersion (1) selon l'une des revendications 6 à 12, **caractérisé en ce que** le dispositif de mémorisation (14) est disposé sur le récipient (3) ou sur et/ou dans la paroi (9) du récipient (3).

14. Dispositif de mélange, d'agitation ou de dispersion (1) selon l'une des revendications 8 à 13, **caractérisé en ce que** le dispositif de mémorisation (14) est une puce RFID (15, 16) lisible et/ou inscriptible électroniquement et le compteur, l'électronique de commande (13) ou l'électronique d'évaluation (12) présente une unité d'émission-réception (18) pour la lecture et/ou l'écriture sans fil de la puce RFID (15, 16).

15. Dispositif de mélange, d'agitation ou de dispersion (1) selon l'une des revendications 6 à 14, **caractérisé en ce que** le dispositif (1) présente un affichage, en particulier un écran (17), pour afficher les informations stockées dans le dispositif de mémorisation (14).
